(19) Europäisches Patentamt / European Patent Office / Office européen des brevets

(11) **EP 2 678 924 B1**

(12) **FASCICULE DE BREVET EUROPEEN**

(45) Date de publication et mention de la délivrance du brevet:
**12.04.2017 Bulletin 2017/15**

(21) Numéro de dépôt: **12709951.3**

(22) Date de dépôt: **22.02.2012**

(51) Int Cl.:
**B26B 19/38** *(2006.01)*   **H02K 33/16** *(2006.01)*

(86) Numéro de dépôt international:
**PCT/FR2012/050373**

(87) Numéro de publication internationale:
**WO 2012/114042 (30.08.2012 Gazette 2012/35)**

(54) **ACTIONNEUR ELECTROMAGNETIQUE A DENSITE DE FORCE AMELIOREE ET APPLICATION A UN RASOIR ELECTRIQUE**

ELEKTROMAGNETISCHER AKTUATOR MIT VERBESSERTER KRAFTDICHTE UND SEINE ANWENDUNG IN EINEM ELEKTRISCHEN RASIERAPPARAT

ELECTROMAGNETIC ACTUATOR HAVING IMPROVED FORCE DENSITY, AND ITS USE IN AN ELECTRIC RAZOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.02.2011 FR 1100541**

(43) Date de publication de la demande:
**01.01.2014 Bulletin 2014/01**

(73) Titulaire: **Moving Magnet Technologies 25000 Besançon (FR)**

(72) Inventeurs:
• **ARLOT, Richard**
  **F-70700 Bonnevent Velloreille (FR)**

• **LOUSSERT, Guillaume**
  **F-25000 Besançon (FR)**

(74) Mandataire: **IP Trust**
  **2, rue de Clichy**
  **75009 Paris (FR)**

(56) Documents cités:
  **EP-A1- 1 005 714      WO-A1-2004/028759**
  **WO-A1-2009/119450    DE-A1-102005 044 176**
  **JP-A- 2005 151 750    US-A- 4 349 757**
  **US-A1- 2002 055 695**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### DOMAINE TECHNIQUE DE L'INVENTION

L'invention se rapporte, de façon générale, au domaine des actionneurs électromagnétiques à course limitée comportant des aimants permanents.

Plus particulièrement, l'invention concerne un actionneur électromagnétique comprenant au moins un ensemble statorique et une partie magnétique, l'ensemble statorique présentant N pôles de même largeur LP et au moins une bobine entourant l'un desdits pôles, avec N≥3, et la partie magnétique étant mobile, relativement à l'ensemble statorique, suivant une direction de déplacement relatif et sur une course C, et comprenant N+1 zones aimantées présentant des aimantations perpendiculaires à la direction de déplacement relatif et de sens alternés, ladite direction de déplacement correspondant à la direction dans laquelle sont alignés les pôles de l'ensemble statorique et les zones aimantées de la partie magnétique, la partie magnétique comporte en outre une culasse adjacente auxdites zones aimantées et assurant la fermeture des flux magnétique traversant ces zones aimant, la course C de la partie magnétique est inférieure ou égale à la largeur LP de chaque pôle de l'ensemble statorique et l'épaisseur desdites zone aimantées perpendiculairement à ladite direction de déplacement, est inférieure à la course C de la partie magnétique

### ETAT DE LA TECHNIQUE ANTERIEURE

Un actionneur de ce type est par exemple connu de la demande internationale de brevet WO 2009/119450.

Un tel actionneur permet de réaliser un dispositif électromécanique utilisable en positionnement contre un ressort ou en mouvement alternatif dans un système mécanique vibrant oscillant.

On connaît, dans l'état de la technique, différents dispositifs qui ont pour objet de résoudre le problème général de la linéarité de la force qu'ils exercent en fonction du courant électrique d'alimentation qu'ils reçoivent, et de développer des niveaux de force qui soient suffisants pour de nombreuses applications.

On connaît aussi le document WO 2004/028759 décrivant un petit appareil électrique avec un dispositif d'entraînement pour la génération d'un mouvement oscillant.

Le dispositif d'entraînement comprend un premier composant d'entraînement, un second composant d'entraînement et une bobine, pour la génération d'un champ magnétique, généré par un premier composant d'entraînement et coopère avec un deuxième élément d'entraînement, disposé de façon mobile dans le petit appareil électrique, de manière à fixer le second composant d'entraînement en un mouvement oscillant.

La demande japonaise JP2005151750 décrit un actionneur linéaire comprenant un stator agencé de manière à être opposé à un élément mobile, comportant une première culasse dans laquelle l'aimant permanent est fixé. Le stator comporte un second noyau enroulé autour d'une bobine, et le second noyau a de l'entrefer en une position faisant face à l'aimant permanent. Un actionneur similaire est décrit dans le brevet US 2002/0055695.

Les documents EP0592647 et EP1005714 (JP2002519981) qui appartiennent à la Demanderesse, présentent des actionneurs électromagnétiques développant un effort proportionnel au courant par l'action mutuelle des champs magnétiques créés par les aimants permanents qu'ils contiennent et de la bobine électrique d'alimentation.

Ces dispositifs électromécaniques sont particulièrement intéressants quand ils sont utilisés dans des systèmes oscillants, en association avec des organes de rappel élastique, où leur caractère proportionnel et leur forte densité de force permettent de vaincre des charges importantes, de nature sèche ou visqueuse. Ces dispositifs comprennent deux parties mobiles identiques se déplaçant en opposition de phase, annulant la quantité de mouvement totale, et garantissant ainsi un équilibre optimal de l'actionneur. Ils sont particulièrement utilisés pour faire vibrer des organes mécaniques en opposition comme, par exemple, les lames d'un rasoir électrique.

L'inconvénient de cette solution est que la densité de force permettant un fonctionnement satisfaisant nécessite un dimensionnement important de la structure. Lorsqu'on réduit les dimensions géométriques pour une configuration compacte, et notamment l'épaisseur de la structure, on aboutit à des situations dans lesquelles la densité de force est insuffisante.

Un premier problème que l'invention vise à résoudre est celui de la réduction de l'encombrement, pour permettre la réalisation d'actionneurs très compacts sans réduction des performances.

Ces dispositifs de l'art antérieur peuvent se relever inefficaces lorsque le besoin d'une miniaturisation importante de l'actionneur est formulé. Ainsi, les dispositifs des brevets EP0592647 et EP1005714 développent des facteurs de force (force par nombre d'ampère-tour) trop faibles qui rendent leur utilisation non viable dans de petits encombrements car se traduisant par des échauffements trop importants. En effet, la réduction de l'encombrement conduit à une réduction du volume imparti pour la bobine électrique. Pour produire une même force, on devra ainsi dépenser une puissance électrique plus importante. Cette puissance plus importante se traduira par une consommation électrique trop importante, limitant la durée d'utilisation à batterie équivalente lorsque le système est embarqué, et se traduira par une puissance Joule dissipée plus importante. Cela peut mener à un échauffement trop important du dispositif occasionnant une gêne à l'utilisateur dans le cas d'une application portable comme un rasoir électrique, ou encore à la destruction de l'actionneur.

La demande internationale de brevet WO 2009/119450 (JP2009240044) précédemment mentionnée reprend l'utilisation de ces structures électromagnétiques en préconisant la suppression de la culasse ferromagnétique dans le but de favoriser la simplicité de construction.

Dans la structure connue de cette demande WO 2009/119450, la réduction de la partie ferromagnétique mobile rend, certes, la construction plus aisée avec moins de pièces à gérer, mais elle requiert surtout un volume d'aimant bien plus important se traduisant au final par un coût, une masse mobile et un encombrement plus élevés.

Le deuxième problème technique que l'invention vise à résoudre est de réduire le volume d'aimant nécessaire, ce qui ne s'est avéré possible que par la mise en oeuvre d'une solution allant à l'encontre de l'enseignement de l'art antérieur susvisé.

## SOMMAIRE DE L'INVENTION

La présente invention vise à pallier les inconvénients de l'état de la technique en réalisant un dispositif d'actionnement électromagnétique à plus forte densité de force comparé aux dispositifs de l'art antérieur.

Plus particulièrement, l'invention permet l'utilisation d'un actionneur performant dans un volume réduit, comparé aux dispositifs de l'art antérieur.

Pour ce faire, la présente invention, par ailleurs conforme à la définition générique qu'en donne le préambule ci-dessus, est essentiellement caractérisé en ce lesdites zones aimantées comprennent au moins deux zones aimantées intérieures présentant, suivant la direction de déplacement, une longueur LA2 égales à la distance entre les plans médians respectifs de deux pôles statoriques consécutifs et lesdites zone aimantées comprennent au moins deux zones aimantées d'extrémité présentant, suivant ladite direction de déplacement, un longueur LA1 comprise entre LP et 1,2 fois LP.

Dans l'acception ici utilisée, le terme "course" désigne la distance maximale séparant deux positions extrêmes occupées par la partie magnétique par rapport à l'ensemble statorique.

### Etat de la technique

On connaît dans l'état de la technique la demande de brevet américain US20020055695 décrivant un actionneur ayant un stator composé d'un premier ensemble de pôles et d'un deuxième ensemble de pôles répartis de chaque côté d'une bobine électrique disposée autour d'un élément central. Le nombre de pôles au stator de chaque côté de la bobine est le même. Lorsque la bobine est alimentée, il y a autant de pôles au stator présentant un pôle Sud que de pôles présentant de pôles Nord.

Dans cette solution de l'art antérieur, la bobine électrique n'entoure pas un pôle mais une partie centrale séparant les pôles Nord des pôles Sud.

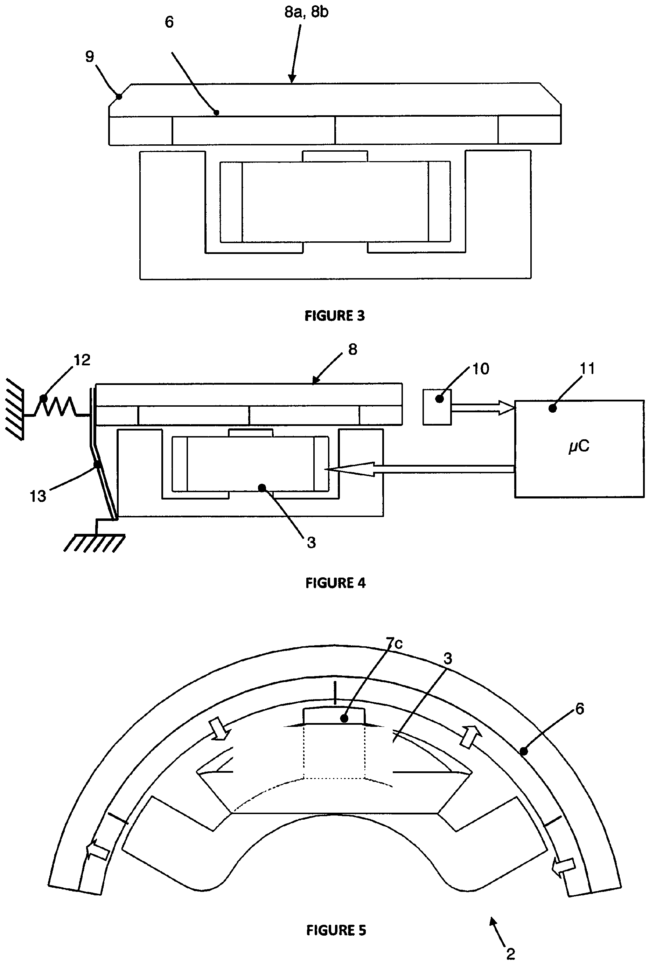

Le stator décrit nécessite une réalisation particulière, comme illustré en figures 3a et 3b, avec une alternance d'un ensemble de tôles discrètes qui, ensemble, constituent un motif élémentaire. Il en résulte un coût de construction élevé du stator.

L'élément mobile constitué d'aimants se déplace dans l'entrefer constitué entre deux pôles de stator opposés et ne présente pas de culasse de fermeture de flux magnétique.

Selon les figures 9 et 10 de ce document de l'art antérieur, on observer qu'il y a deux fois plus de pôles au stator que de pôles aimantés (chaque « dent » au stator représentant bien un pôle).

On connaît également dans l'art antérieur le brevet DE 102005044176 décrivant un actionneur présentant un stator à deux pôles.

Dans cette solution, chaque terminaison des deux pôles du noyau fait face à une transition d'aimants, c'est-à-dire à une zone séparant un pôle aimanté Nord d'un pôle aimanté Sud. Lorsque le stator se déplace relativement au noyau bobiné, chaque terminaison de pôles se trouve face, chacun, à un pôle Nord (si le stator se déplace vers la droite), ou à un pôle Sud (si le stator se déplace vers la droite).

Ainsi, théoriquement, le flux produit par les aimants et traversant les bobines est nul quelle que soit la position. Cela se traduit par un actionneur incapable de produire un effort avec courant.

Afin de réaliser un effort avec courant, lors du déplacement du stator par rapport aux parties aimantés, chaque pôle doit se retrouver face à une polarité d'aimant différente de manière à réaliser une variation de flux magnétique dans la bobine, variation de flux à l'origine de la force électromagnétique créée.

On connaît également dans l'art antérieur le brevet EP1005714 décrivant un actionneur magnétique dont le motif de base est identique et constitué d'un stator à deux pôles et une ou deux parties mobiles présentant 3 aimants alternés.

L'invention propose de modifier la structure magnétique de l'actionneur décrit par le brevet EP1005714 en augmentant son facteur de force dans un même volume, sans modification de ses caractéristiques intrinsèques que sont le volume de la bobine et sa perméance.

Il est ainsi possible de réaliser, conformément à l'invention, un actionneur dont le volume est sensiblement inférieur au volume qui serait requis par un actionneur réalisé selon l'enseignement du brevet EP1005714 pour développer une force de même niveau.

L'adjonction aux aimants d'une culasse ferromagnétique douce permet, contrairement à l'enseignement de l'art antérieur WO 2009/119450, d'augmenter sensiblement les performances de l'actionneur en rebouclant efficacement le flux magnétique et en limitant les pertes de potentiel magnétique.

La limitation de la course C à une valeur inférieure ou égale à la largeur d'un pôle appartenant à l'ensemble statorique permet de garder un ratio force par masse d'aimant optimal et de conserver une caractéristique de force quasi-linéaire sur la course.

La limitation de l'épaisseur des zones aimantées à une valeur inférieure à la course C de la partie magnétique, qui est par exemple rendue possible grâce à l'emploi d'aimants à forte énergie type NdFeB ou SmCo, permet l'obtention d'une densité de force par volume d'actionneur et par masse d'aimant supérieure à celles des structures de l'art antérieur.

Dans l'actionneur de l'invention, N est par exemple égal à 3, et cet actionneur comporte de préférence une bobine unique entourant le pôle central de l'ensemble statorique.

Lesdites zones aimantées comprennent avantageusement au moins deux zones aimantées intérieures présentant, suivant ladite direction de déplacement, une longueur LA2 égale à la distance entre les plans médians respectifs de deux pôles statoriques consécutifs, ces plans médians s'étendant perpendiculairement à ladite direction de déplacement.

Par ailleurs, lesdites zones aimantées comprennent au moins deux zones aimantées d'extrémité présentant de préférence, suivant ladite direction de déplacement, une longueur LA1 comprise entre LP et 1,2 fois LP.

Selon un premier mode de réalisation possible de l'invention, lesdites zones aimantées sont formées par des aimants indépendants et adjacents, fixés sur la culasse.

Selon un autre mode de réalisation possible, lesdites zones aimantées sont formées par un aimant unique, présentant des zones aimantées alternativement en sens opposés et des transitions d'une longueur inférieure à 0,2 fois LP. En effet, lorsque la transition magnétique entre deux zones aimantées est plus importante que ce facteur, la perte de force devient significative pour une même masse d'aimant.

Selon une variante, l'actionneur comporte deux parties magnétiques mobiles se déplaçant en sens opposés, ce qui permet de compenser la quantité de mouvement de ces deux parties.

Selon une autre variante, l'actionneur comporte trois parties magnétiques mobiles se déplaçant en sens alternés, ce qui permet de compenser la quantité de mouvement et le moment cinétique de ces trois parties.

L'ensemble statorique est avantageusement relié à chaque partie magnétique par des lames de suspension.

Selon une variante particulière, l'ensemble statorique est relié à chaque partie magnétique par des éléments de rappel élastique conçus pour rappeler cette partie magnétique vers le milieu de sa course C.

La bobine est avantageusement conçue pour être alimentée par un courant alternatif et pour produire ainsi un déplacement vibratoire de la partie magnétique par rapport à l'ensemble statorique.

Selon un mode de réalisation possible, les surfaces des pôles statoriques sont par exemple inscrites dans une enveloppe cylindrique, la ou les parties magnétiques présentant alors une forme semi-tubulaire conjuguée à ladite enveloppe cylindrique.

Par ailleurs, ladite culasse peut présenter des chanfreins à ses extrémités suivant ladite direction de déplacement.

Il peut aussi être avantageux de prévoir que chaque pôle de l'ensemble statorique présente une tête de largeur LP et un corps de largeur inférieure à LP.

Dans certaines applications, l'actionneur de l'invention peut comporter en outre un capteur magnétique et un circuit électronique d'asservissement, le capteur magnétique étant positionné en regard de la partie magnétique et étant conçu pour fournir un signal de sortie représentatif de la position absolue de cette partie magnétique, et le circuit électronique d'asservissement recevant le signal de sortie du capteur magnétique et étant conçu pour asservir la position de la partie magnétique à une position déterminée par une valeur de consigne fournie à ce circuit électronique d'asservissement.

L'invention concerne en outre l'application d'un actionneur tel que précédemment décrit à la réalisation d'un rasoir électrique comprenant une tête portant des couteaux animés d'un mouvement vibratoire, caractérisée en ce que chacun desdits couteaux est lié cinématiquement à la partie magnétique d'un tel actionneur.

L'ajout de deux aimants d'extrémité aux aimants du dispositif magnétique tel que décrit par le document EP1005714 permet de créer un facteur de force plus élevé d'un facteur 4/3 soit 33% d'augmentation de force pour un même courant, une même bobine, une même puissance électrique et un même volume d'actionneur.

En effet, pour le cas où N=3 et où il existe une seule et unique bobine disposée sur le pôle central de l'ensemble statorique, la valeur de la force F théorique produite par l'actionneur, égale au produit du facteur de force par le nombre d'ampère-tour de la bobine, réalisé par exemple à l'aide d'un schéma électrique équivalent, est donnée par la relation :

$$F = \frac{8B_r LZ}{3E} ni$$

où $B_r$ est la rémanence de l'aimant, L son épaisseur dans la direction de son aimantation, Z sa profondeur, E l'entrefer comprenant l'aimant, et *ni* le nombre d'ampère-tour de la bobine.

Dans les actionneurs de l'art antérieur avec culasse cités précédemment et comprenant une seule bobine tels que décrit dans les documents EP1005714 et EP0592647, le facteur appliqué à la quantité $\frac{B_r LZ}{E} ni$ n'est pas de 8/3 mais de 2.

## BREVE DESCRIPTION DES FIGURES

D'autres caractéristiques et avantages de l'invention ressortiront clairement de la description qui est faite ci-après de divers exemples de réalisation détaillés, donnés à titre indicatif et nullement limitatif et en référence aux dessins annexés dans lesquels :

- la figure 1 est une vue de face d'un actionneur conforme à un premier mode de réalisation ;
- la figure 2 est une vue de trois-quarts d'un actionneur conforme à un deuxième mode de réalisation ;
- la figure 3 est une vue de face d'un actionneur conforme à une variante du premier mode de réalisation ;
- la figure 4 est un schéma de principe de fonctionnement d'un actionneur conforme à un mode de réalisation incluant une boucle d'asservissement elle-même dotée d'un capteur;
- la figure 5 est vue de face d'un actionneur conforme à un troisième mode de réalisation ;
- la figure 6 est une vue de trois-quarts d'un actionneur conforme à un quatrième mode de réalisation ;
- la figure 7 est un graphe illustrant l'évolution de paramètres importants de fonctionnement d'un actionneur conforme à l'invention, les paramètres notés $L_P$ et La1 apparaissant sur ce graphe étant les mêmes que ceux dénommés LP et LA1 dans la présente description; et
- la figure 8 est une vue de face de l'actionneur suivant un cinquième mode de réalisation.

## DESCRIPTION DETAILLEE DES FIGURES

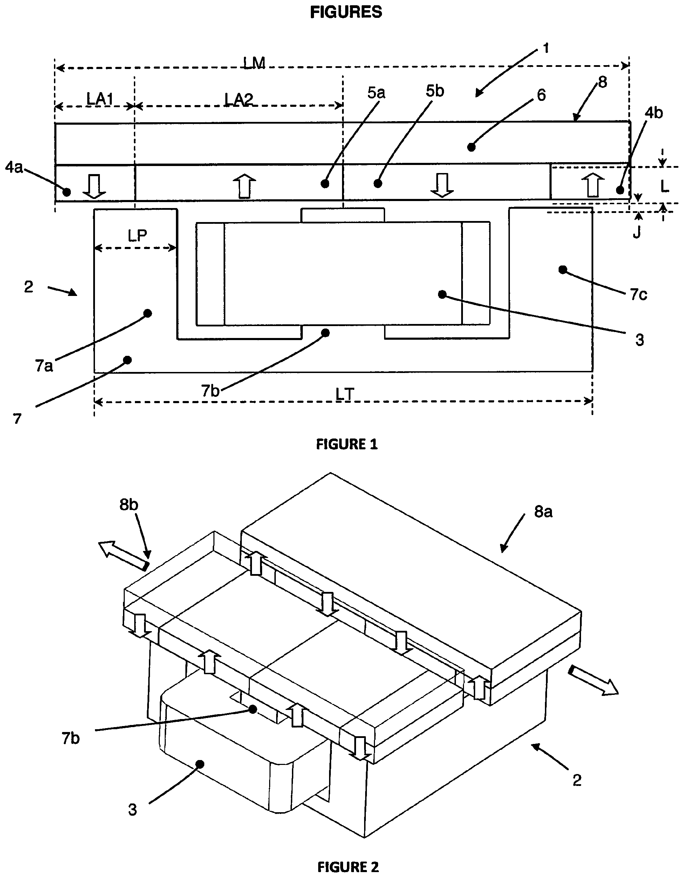

La figure 1 représente, vu de face, un actionneur (1) conforme au premier mode de réalisation de l'invention. Cet actionneur comprend un ensemble statorique (2) essentiellement formé, d'une part, d'un stator (7) en matériau ferromagnétique doux ayant trois pôles (7a, 7b et 7c) s'étendant chacun suivant une direction axiale, orientée verticalement sur la figure 1 et contenue dans le plan de cette figure, et, d'autre part, d'une bobine électrique (3) enroulée autour du pôle central (7b). Les pôles (7a, 7b et 7c) ont tous une même largeur de valeur LP, cette largeur étant mesurée suivant une direction longitudinale, orientée horizontalement sur la figure 1 et contenue dans le plan de cette figure, c'est-à-dire dans la direction d'alignement de ces pôles et perpendiculairement à la direction axiale.

L'actionneur comprend par ailleurs une partie magnétique (8) disposée, parallèlement à l'ensemble statorique (2), en regard des pôles (7a, 7b et 7c) dont elle est séparée par un jeu mécanique (J). Cette partie magnétique (8) est sélectivement animée, par rapport à l'ensemble statorique (2), d'un mouvement relatif de course C et orienté suivant la direction longitudinale, c'est-à-dire horizontalement dans le plan de la figure 1. Le stator ne présente qu'un seul et même profil permettant la réalisation par empilement d'un paquet de tôles identiques.

Cette partie magnétique (8) comporte une culasse (6) faite d'un matériau ferromagnétique doux et sur laquelle sont placés quatre aimants, à savoir deux aimants d'extrémités identiques (4a et 4b) et deux aimants intérieurs identiques (5a et 5b). Les aimants d'extrémités (4a et 4b) présentent une même longueur de valeur LA1, cette longueur étant mesurée suivant la direction longitudinale, c'est-à-dire horizontalement dans le plan de la figure 1. De même, les aimants intérieurs (5a et 5b) présentent une même longueur de valeur LA2, cette longueur étant elle aussi mesurée suivant la direction longitudinale.

Le stator présente N pôles et au moins une bobine entourant l'un des dits pôles. Dans le cas où N=3 illustré par les figures annexées, il n'y a qu'un pôle Nord (ou Sud) pour deux pôles Sud (respectivement Nord) lorsque la bobine est alimentée.

Les quatre aimants (4a, 4b, 5a et 5b) présentent une même épaisseur de valeur L, cette épaisseur étant mesurée suivant la direction axiale, c'est-à-dire verticalement dans le plan de la figure 1. L'épaisseur L des pôles est inférieure à la course C de la partie magnétique (8) et à la largeur des pôles LP. En outre, ces aimants sont tous aimantés suivant la direction axiale. La large flèche blanche sur chacun des aimants (4a, 4b, 5a et 5b) illustrés à la figure 1 indique la direction axiale et le sens de l'aimantation ou de polarisation de cet aimant. Ces aimants (4a, 4b, 5a et 5b) doivent donc être aimantés de manière que deux aimants contigus aient des polarités opposées. Ainsi, sur cette figure 1, l'aimant (4a) et l'aimant (5b) ont une polarisation dirigée vers l'ensemble statorique (2), alors que les aimants (4b) et (5a) ont une polarisation dirigée à l'opposé de l'ensemble statorique (2).

Les aimants sont solidaires d'une culasse de sorte que le flux magnétique ne traverse que deux épaisseurs d'air (entrefer), ce qui permet de réduire les pertes de potentiel magnétique et d'éviter la dégradation des performances de l'actionneur par rapport à des solutions de l'art antérieur.

**[0062]** [0001] Lorsque le stator (2) bouge relativement aux parties aimantées (8), chaque pôle consécutif au stator est en face d'une polarité différente. Cela permet d'assurer que le flux magnétique produit par les aimants et traversant les bobines varie suivant la position, assurant une force avec courant non nulle.

La course C, c'est-à-dire le débattement total de la partie magnétique (8) suivant la direction longitudinale, est limitée au maximum à la largeur LP des pôles (7a, 7b et 7c) du stator (7). Dans la position de milieu de course de la partie magnétique (8), les transitions des aimants, c'est-à-dire les frontières entre les aimants (4a) et (5a), entre les aimants (5a) et (5b), et entre les aimants (5b) et (4b), s'étendent parallèlement à la direction axiale des pôles (7a, 7b et 7c), c'est-à-dire verticalement, et sont positionnées au milieu de ces pôles, c'est-à-dire à la moitié de la largeur LP. Sur la figure 1, la partie magnétique (8) est donc représentée exactement au milieu de sa course C, cette course étant au maximum égale à LP.

Les aimants d'extrémités (4a et 4b) ont une longueur LA1 au moins égale à la largeur LP des pôles (7a, 7b et 7c).

En conséquence, la longueur totale LM de la partie magnétique (8) est au moins égale à la longueur totale LT de l'ensemble statorique (2), augmentée de la largeur LP d'un pôle, ce qui s'écrit : LM $\geq$ LT+LP.

Pour limiter la masse totale mobile, la longueur de la culasse (6) supportant les aimants (4a, 4b, 5a et 5b) est avantageusement égale à la somme des longueurs des aimants, comme illustré à la figure 1. Pour des raisons de tenue mécanique extérieure, il peut cependant être envisagé d'augmenter la longueur de cette culasse (6) afin de permettre l'accrochage mécanique d'une suspension ou d'un organe extérieur à déplacer.

La figure 2 présente un mode de réalisation de l'actionneur qui utilise deux parties magnétiques mobiles se déplaçant en opposition de phase, un tel actionneur étant par exemple utilisé pour actionner les lames d'un rasoir électrique. Bien que relative à un mode de réalisation éventuellement différent de celui qu'illustre la figure 1, cette figure en perspective permet de comprendre que tous les éléments illustrés à la figure 1 s'étendent aussi en profondeur suivant une direction perpendiculaire au plan de la figure 1. L'actionneur (1) illustré à la figure 2 comprend deux parties magnétiques distinctes indépendantes (8a et 8b) qui présentent chacune des aimants comme décrits plus haut. Chacun des aimants de la partie magnétique (8a) a une polarité opposée à celle de l'aimant de la partie magnétique (8b) qui lui correspond en position, de manière que, lorsqu'un flux magnétique est produit par la bobine électrique (3) unique enroulée autour du pôle central (7b) de l'ensemble statorique (2), les deux parties magnétiques (8a et 8b) se déplacent dans des sens opposés. De ce fait, en faisant varier le courant de manière périodique et bipolaire (positif et négatif), le mouvement des deux parties magnétiques (8a et 8b) se fait en opposition de phase. Les flèches droites rayées montrent le sens de la force et du déplacement pour un courant arbitraire circulant dans la bobine.

Dans un exemple de réalisation possible et réaliste, les différents paramètres de construction peuvent prendre les valeurs suivantes, exprimées en millimètres :

LM=22    LA1=3.6    LA2=7.4    LP=3.2    LT=18    L=1.4
J=0.25    C= 3

Dans le but d'alléger la masse mobile, il est possible de réaliser des chanfreins (9) aux extrémités des culasses (6) de la ou des parties magnétiques (8a et 8b) comme illustré en figure 3. En effet, ces chanfreins (9) sont réalisés dans des zones qui ne sont pas utiles magnétiquement puisque le flux magnétique ne passe pas par ces extrémités. L'allégement des masses mobiles permet notamment, outre l'obtention d'un gain de matière et de coût, de diminuer, pour une fréquence donnée, la raideur nécessaire aux organes, ou éléments, de rappel élastique généralement associés à ces parties magnétiques (8a et 8b).

La figure 4 est un schéma de principe illustrant le fonctionnement d'un actionneur équipé d'une boucle d'asservissement. Dans cette boucle, un capteur de position (10), optionnellement mais préférentiellement magnétique, détecte le déplacement relatif de la partie magnétique (8) par rapport à l'ensemble statorique (2) et envoie à un circuit électronique d'asservissement (11) un signal de sortie représentatif de la position de cette partie magnétique (8). Le circuit électronique d'asservissement (11), qui est par exemple essentiellement constitué d'un microcontrôleur et qui dispose d'une valeur de consigne servant de référence instantanée ou moyenne, peut ainsi réguler le courant dans la bobine (3) de manière que la partie magnétique (8) adopte une position instantanée ou moyenne qui dépend de la valeur de consigne. De façon avantageuse mais nullement limitative, la partie magnétique (8), qui est mobile relativement à l'ensemble statorique (2), est reliée à cet ensemble statorique (2) par des lames de suspension (13) qui peuvent assurer le positionnement relatif de la partie magnétique (8) par rapport à l'ensemble statorique (2), et reliée également à un élément de rappel élastique (12).

La figure 5 illustre un troisième mode de réalisation possible de l'actionneur, dans lequel la partie magnétique effectue un mouvement rotatif et non plus une simple translation. Néanmoins, l'actionneur de la figure 5 comporte les mêmes éléments que les actionneurs déjà décrits ci-dessus, à savoir, pour N=3 : un ensemble statorique (2) composé de trois pôles et portant une bobine (3) sur son pôle central (7c), et une partie magnétique composée d'une culasse (6) portant quatre aimants, de polarisations alternées et à direction d'aimantation unidirectionnelle, en l'occurrence radiale.

En revanche, dans ce mode de réalisation, les surfaces des pôles statoriques sont inscrites dans une enveloppe cylindrique, et la ou les parties magnétique présentent une forme semi-tubulaire conjuguée à l'enveloppe cylindrique.

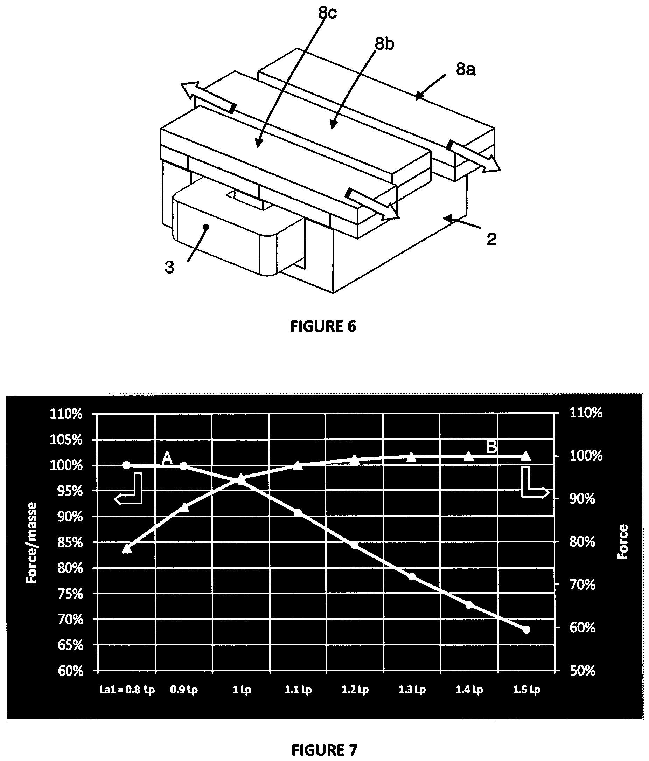

La figure 6 illustre un quatrième mode de réalisation possible de l'actionneur, dans lequel cet actionneur comporte trois parties magnétiques mobiles (8a, 8b, 8c) relativement à l'ensemble statorique (2), qui est alors commun à ces trois parties magnétiques. De manière préférentielle, les deux parties magnétiques mobiles extérieures (8a, 8c) sont identiques et présentent donc la même aimantation de leurs aimants d'extrémité et de leurs aimants intérieurs. Ainsi, ces parties magnétiques (8a, 8c) sont animées du même mouvement lorsqu'un courant électrique parcourt la bobine (3). La troisième partie magnétique (8b), qui est disposée entre les deux premières (8a, 8c), comprend des aimants dont la polarisation est opposée à celle des deux premières parties magnétiques (8a, 8c). Ainsi, cette partie magnétique centrale (8b) se déplace en sens opposé des deux autres parties magnétiques (8a, 8c) lorsqu'un même courant circule dans la bobine (3). Les flèches droites rayées donnent un exemple du sens de la force qui s'applique sur chacune des parties magnétiques mobiles (8a, 8b, 8c) relativement à l'ensemble statorique (2), et donc du sens du mouvement correspondant.

Le mode de réalisation illustré à la figure 6 présente l'avantage de permettre une compensation complète du moment cinétique total des parties magnétiques mobiles (8a, 8b, 8c). Il en résulte un confort d'utilisation accru lorsqu'il s'agit d'une application portable, par exemple, quand les parties magnétiques mobiles (8a, 8b, 8c) servent à déplacer les lames d'un rasoir. Dans ce but, il est fait en sorte que la masse mobile de la partie magnétique mobile centrale (8b) soit équivalente à la masse totale des deux autres parties magnétiques mobiles (8a et 8c).

La figure 7 montre l'évolution typique de la force et du ratio force par masse d'aimant en fonction de la longueur LA1 des aimants d'extrémité. Ainsi, la courbe A à trait plein et marqueurs ronds montre l'évolution du ratio de la force sur masse d'aimant en pourcentage de la valeur maximale de référence prise pour LA1 = 0,8 fois LP, l'échelle correspondante figurant sur l'axe vertical de gauche. La courbe B à trait plein et marqueurs triangulaires montre l'évolution de la force avec courant en pourcentage de la valeur maximale de référence prise pour LA1 = 1,5 fois LP, l'échelle correspondante figurant sur l'axe vertical de droite.

Ces courbes montrent ainsi que, dans le but d'obtenir le meilleur compromis entre la force totale produite avec courant et la force optimale par masse d'aimant, la valeur de LA1 doit être choisie dans un intervalle allant de LP à 1,2 LP. Un choix différent, bien que possible, entraîne soit une utilisation non optimale de la quantité d'aimant, soit un manque de force pour un encombrement global donné de l'actionneur. Il est à noter que l'effort sans courant obtenu est faiblement modulé par la modification de la largeur LA1, et ne constitue donc pas un critère pertinent de dimensionnement.

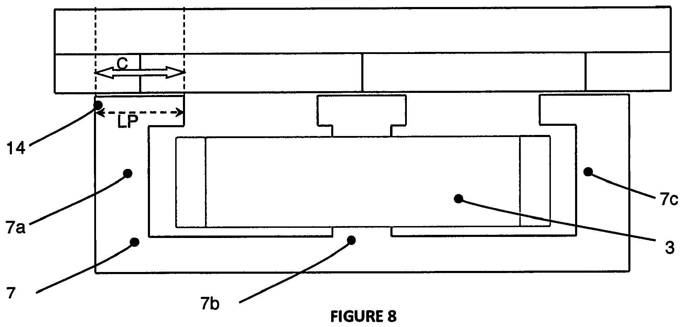

La figure 8 illustre un cinquième mode de réalisation possible de l'actionneur, dans lequel le stator (7) présente trois pôles (7a, 7b, 7c) dont chacun présente une tête (14) et un corps de largeurs différentes. Plus précisément, alors que chaque tête (14) de pôle, qui peut venir de matière avec le corps de ce pôle ou être rapportée sur lui, présente comme indiqué précédemment une largeur LP, le corps de ce pôle présente une largeur inférieure à LP. Ce mode de réalisation alternatif peut avantageusement être utilisé notamment pour permettre d'installer une bobine (3) plus large autour du pôle central (7b).

Sur cette figure 8, la double flèche pleine horizontale montre la course maximale C que peut avoir la partie magnétique mobile (8) au-dessus de l'ensemble statorique (2).

**Revendications**

1.  Actionneur électromagnétique comprenant au moins un ensemble statorique (2) et une partie magnétique (8), l'ensemble statorique (2) présentant N pôles (7) de même largeur LP et au moins une bobine (3) entourant l'un desdits pôles (7b), et la partie magnétique (8) étant mobile, relativement à l'ensemble statorique (2), suivant une direction de déplacement relatif et sur une course C, et comprenant N+1 zones aimantées (4, 5) présentant des aimantations perpendiculaires à la direction de déplacement relatif et de sens alternés la partie magnétique (8) comporte en outre une culasse (6) adjacente auxdites zones aimantées (4, 5) et assurant la fermeture des flux magnétiques traversant ces zones aimantées (4, 5), la course C de la partie magnétique (8) est inférieure ou égale à la largeur LP de chaque pôle (7) de l'ensemble statorique (2), le nombre N des pôles est N≥3, l'épaisseur (L) desdites zones aimantées (4, 5), perpendiculairement à ladite direction de déplacement, est inférieure à la course C de la partie magnétique (8), **caractérisé en ce que** lesdites zones aimantées comprennent au moins deux zones aimantées intérieures (5a, 5b) présentant, suivant ladite direction de déplacement, une longueur LA2 égale à la distance entre les plans médians respectifs de deux pôles statoriques consécutifs (7), et **en ce que** lesdites zones aimantées comprennent au moins deux zones aimantées d'extrémité (4a, 4b) présentant, suivant ladite direction de déplacement, une longueur LA1 comprise entre LP et 1,2 fois LP.

**2.** Actionneur selon la revendication 1 ou 2, **caractérisé en ce que** N est égal à 3.

**3.** Actionneur selon l'une au moins des revendications 1 à 2 **caractérisé en ce que** lesdites zones aimantées (4, 5) sont formées par des aimants indépendants et adjacents, fixés sur la culasse (6).

**4.** Actionneur selon l'une au moins des revendications 1 à 3 **caractérisé en ce que** lesdites zones aimantées (4, 5) sont formées par un aimant unique, présentant des zones aimantées alternativement en sens opposés et des transitions d'une longueur inférieure à 0,2 fois LP.

**5.** Actionneur selon l'une quelconque des revendications précédentes **caractérisé en ce qu'**il comporte deux parties magnétiques mobiles (8a, 8b) se déplaçant en sens opposés.

**6.** Actionneur selon l'une quelconque des revendications 1 à 5 **caractérisé en ce qu'**il comporte trois parties magnétiques mobiles (8a, 8b, 8c) se déplaçant en sens alternés.

**7.** Actionneur selon l'une quelconque des revendications précédentes **caractérisé en ce qu'**il comporte une bobine unique (3) entourant le pôle central (7b) de l'ensemble statorique (2).

**8.** Actionneur selon l'une quelconque des revendications précédentes **caractérisé en ce que** l'ensemble statorique (2) est relié à chaque partie magnétique (8) par des lames de suspension (13).

**9.** Actionneur selon l'une quelconque des revendications précédentes **caractérisé en ce que** l'ensemble statorique (2) est relié à chaque partie magnétique (8) par des éléments de rappel élastique (12) conçus pour rappeler cette partie magnétique vers le milieu de sa course C.

**10.** Actionneur selon l'une quelconque des revendications précédentes **caractérisé en ce que** la bobine (3) est conçue pour être alimentée par un courant alternatif et produire ainsi un déplacement vibratoire de la partie magnétique (8) par rapport à l'ensemble statorique (2).

**11.** Actionneur selon l'une quelconque des revendications précédentes **caractérisé en ce que** les surfaces des pôles statoriques (7) sont inscrites dans une enveloppe cylindrique et **en ce que** la ou les parties magnétiques (8) présentent une forme semi-tubulaire conjuguée à la dite enveloppe cylindrique.

**12.** Actionneur selon l'une quelconque des revendications précédentes **caractérisé en ce que** ladite culasse (6) présente des chanfreins (9) à ses extrémités suivant ladite direction de déplacement.

**13.** Actionneur selon l'une quelconque des revendications précédentes **caractérisé en ce que** chaque pôle (7) de l'ensemble statorique (2) présente une tête de largeur LP et un corps de largeur inférieure à LP.

**14.** Actionneur selon l'une quelconque des revendications précédentes **caractérisé en ce qu'**il comporte en outre un capteur magnétique (10) et un circuit électronique d'asservissement (11), le capteur magnétique (10) étant positionné en regard de la partie magnétique (8) et conçu pour fournir un signal de sortie représentatif de la position absolue de cette partie magnétique (8), et le circuit électronique d'asservissement (11) recevant le signal de sortie du capteur magnétique (10) et étant conçu pour asservir la position de la partie magnétique (8) à une position déterminée par une valeur de consigne fournie à ce circuit électronique d'asservissement.

**15.** Application d'un actionneur suivant l'une quelconque des revendications précédentes à la réalisation d'un rasoir électrique comprenant une tête portant des couteaux animés d'un mouvement vibratoire, **caractérisée en ce que** chacun desdits couteaux est lié cinématiquement à la partie magnétique d'un tel actionneur.

**Patentansprüche**

1. Elektromagnetisches Stellglied, das mindestens eine Statorbaugruppe (2) und einen magnetischen Teil (8) umfasst, wobei die Statorbaugruppe (2) N Pole (7) gleicher Breite LP aufweist und mindestens eine Spule (3), welche einen der besagten Pole (7b) umgibt, wobei der magnetische Teil (8) in Bezug auf die Statorbaugruppe (2) in einer relativen Bewegungsrichtung auf einem Hub C beweglich ist, und N+1 magnetisierte Bereiche (4, 5) mit Magnetisierungen senkrecht zur relativen Bewegungsrichtung und mit wechselnden Richtungen aufweist.

   Der magnetische Teil (8) umfasst des Weiteren ein Joch (6) neben besagten magnetisierten Bereichen (4, 5), welches das Schließen der durch die magnetisierten Bereiche (4, 5) fließenden Magnetströme gewährleistet. Hub C des magnetischen Teils (8) ist kleiner/gleich der Breite LP jeden Pols (7) der Statorbaugruppe (2), die Anzahl der Pole beträgt N≥3, die Dicke (L) besagter magnetisierter Bereiche (4, 5) senkrecht zur besagten Bewegungsrichtung ist kleiner als Hub C des magnetischen Teils (8), **dadurch gekennzeichnet, dass** besagte magnetisierte Bereiche mindesten zwei innere magnetisierte Bereiche (5a, 5B) umfassen, die in der Bewegungsrichtung eine Länge LA2 gleich der Entfernung zwischen den jeweiligen Mittelebenen der beiden aufeinanderfolgenden Statorpole (7) aufweisen, und dadurch, dass besagte magnetisierte Bereiche mindestens zwei magnetisierte Endbereiche (4a, 4b) umfassen, die in der Bewegungsrichtung eine Länge LA1 zwischen LP und 1,2 Mal LP aufweisen.

2. Stellglied nach Ansprüche 1, **dadurch gekennzeichnet, dass** N gleich 3 ist.

3. Stellglied nach mindestens einem der Ansprüche 1 bis 2, **dadurch gekennzeichnet, dass** besagte magnetisierte Bereiche (4, 5) gebildet werden durch unabhängige, nebeneinander liegende Magnete, die am Joch (6) befestigt sind.

4. Stellglied nach mindestens einem der Ansprüche 1 bis 3, **dadurch gekennzeichnet, dass** besagte magnetisierte Bereiche (4, 5) gebildet werden durch einen einzigen Magneten, der in wechselnder Richtung magnetisierte Bereiche und Übergänge mit einer Länge kleiner 0,2 Mal LP aufweist.

5. Stellglied nach einem der vorhergehenden Ansprüche, **dadurch gekennzeichnet, dass** es zwei bewegliche magnetische Teile (8a, 8b) umfasst, die sich in wechselnder Richtung bewegen.

6. Stellglied nach einem der Ansprüche 1 bis 5, **dadurch gekennzeichnet, dass** es drei bewegliche magnetische Teile (8a, 8b, 8c) umfasst, die sich in wechselnder Richtung bewegen.

7. Stellglied nach einem der vorhergehenden Ansprüche, **dadurch gekennzeichnet, dass** es eine einzige Spule (3) umfasst, die den mittigen Pol (7b) der Statorbaugruppe (2) umgibt.

8. Stellglied nach einem der vorhergehenden Ansprüche, **dadurch gekennzeichnet, dass** die Statoreinheit (2) über Blattfedern (13) mit jedem magnetischen Teil (8) verbunden ist.

9. Stellglied nach einem der vorhergehenden Ansprüche, **dadurch gekennzeichnet, dass** die Statorbaugruppe (2) mit jedem magnetischen Teil (8) über federelastische Rückholelemente (12) verbunden ist, die dafür entwickelt wurden, diesen magnetischen Teil in die Mitte seines Hubs C zurück zu holen.

10. Stellglied nach einem der vorhergehenden Ansprüche, **dadurch gekennzeichnet, dass** die Spule (3) so entwickelt ist, dass sie mit Wechselstrom gespeist wird und somit eine Vibrationsbewegung des magnetischen Teils (8) in Bezug auf die Statoreinheit (2) erzeugt.

11. Stellglied nach einem der vorhergehenden Ansprüche, **dadurch gekennzeichnet, dass** sich die Oberflächen der Statorpole (7) in einen zylindrischen Mantel einschreiben und der oder die magnetischen Teile (8) eine, diesem zylindrischen Mantel komplementäre Halbhohlform aufweisen.

12. Stellglied nach einem der vorhergehenden Ansprüche, **dadurch gekennzeichnet, dass** besagtes Joch (6) in der Bewegungsrichtung Schrägen (9) an seinen Enden hat.

13. Stellglied nach einem der vorhergehenden Ansprüche, **dadurch gekennzeichnet, dass** jeder Pol (7) der Statoreinheit (2) einen Kopf mit der Breite LP und einen Körper mit einer Breite kleiner LP aufweist.

14. Stellglied nach einem der vorhergehenden Ansprüche, **dadurch gekennzeichnet, dass** es des Weiteren einen Magnetsensor (10) und einen elektronischen Regelkreis (11) umfasst, wobei der Magnetsensor (10) gegenüber dem magnetischen Teil (8) positioniert ist und so konzipiert wurde, dass er ein für die absolute Position dieses magnetischen Teils (8) repräsentatives Ausgangssignal liefert, und der elektronische Regelkreis (11) das Ausgangssignal des Magnetsensors (10) empfängt und so konzipiert wurde, dass die Position des magnetischen Teils (8) auf einen durch einen Sollwert, welcher dem elektronischen Regelkreis geliefert wird, festgelegten Wert einzustellen.

15. Anwendung eines Stellglieds gemäß einem der vorhergehenden Ansprüche auf die Herstellung eines elektrischen Rasierers, welcher einen Kopf mit Klingen aufweist, die durch eine Vibrationsbewegung bewegt werden, **dadurch gekennzeichnet, dass** jede dieser Klingen kinematisch mit dem magnetischen Teil eines solchen Stellglieds verbunden ist.

**Claims**

1. An electromagnetic actuator comprising at least one stator assembly (2) and a magnetic part (8), with the stator assembly (2) having N poles (7) of the same width LP and at least one coil (3) surrounding one of said poles (7b), and with the magnetic part (8) being movable, relative to the stator assembly (2) in a direction of relative movement and along a stroke C, and comprising N+1 magnetized regions (4, 5) having magnetizations perpendicular to the direction of relative movement and with alternate directions, with said magnetic part (8) further comprising a yoke (6) adjacent to said magnetized regions (4, 5) and ensuring the closing off of the magnetic flux passing through such magnetized regions (4, 5), with the stroke C of the magnetic part (8) being smaller than or equal to the width LP of each pole (7) of the stator assembly (2), with the number N of poles being N≥3, with the thickness (L) of said magnetized regions (4, 5), perpendicularly to said direction of movement, being smaller than the stroke C of the magnetic part (8), **characterized in that** said magnetized regions comprise at least two internal magnetized regions (5a, 5b) having a length LA2 equal to the distance between the respective mid-planes of two consecutive stator poles (7), in said direction of movement, and **in that** said magnetized regions comprise at least two end magnetized regions (4a, 4b) having a length LA1 ranging from LP and 1.2 times LP, in said direction of movement.

2. An actuator according to claim 1, **characterized in that** N is equal to 3.

3. An actuator according to at least one of claims 1 or 2, **characterized in that** said magnetized regions (4, 5) consist of independent and adjacent magnets fixed on the yoke (6).

4. An actuator according to at least one of claims 1 to 3, **characterized in that** said magnetized regions (4, 5) consist of a single magnet, having regions magnetized alternately in opposite directions, and transitions having a length smaller than 0.2 times LP.

5. An actuator according to any one of the preceding claims, **characterized in that** it comprises two mobile magnetic parts (8a, 8b) moving in opposite directions.

6. An actuator according to any one of claims 1 to 5, **characterized in that** it comprises three mobile magnetic parts (8a, 8b, 8c) moving in alternate directions.

7. An actuator according to any one of the preceding claims, **characterized in that** it comprises a single coil (3) surrounding the central pole (7b) of the stator assembly (2).

8. An actuator according to any one of the preceding claims, **characterized in that** the stator assembly (2) is connected to each magnetic part (8) by leaf springs (13).

9. An actuator according to any one of the preceding claims, **characterized in that** the stator assembly (2) is connected to each magnetic part (8) by elastic return elements (12) so designed as to move such magnetic part back to the middle of its stroke C.

10. An actuator according to any one of the preceding claims, **characterized in that** the coil (3) is so designed as to be powered by an alternating current and thereby produce a vibratory movement of the magnetic part (8) relative to the stator assembly (2).

11. An actuator according to any one of the preceding claims, **characterized in that** the surfaces of the stator poles (7) are inscribed in a cylindrical envelope and **in that** the magnetic part(s) (8) has/have a semi-tubular shape matching said cylindrical envelope.

12. An actuator according to any one of the preceding claims, **characterized in that** said yoke (6) has chamfers (9) at its ends, in said direction of displacement.

13. An actuator according to any one of the preceding claims, **characterized in that** each pole (7) of the stator assembly (2) has a head with a width LP and a body with a width smaller than LP.

14. An actuator according to any one of the preceding claims, **characterized in that** it further comprises a magnetic sensor (10) and a servo-control electronic circuit (11), with the magnetic sensor (10) being positioned opposite the magnetic part (8) and so designed as to provide an output signal representative of the absolute position of such magnetic part (8), and the servo-control electronic circuit (11) receiving the output signal from the magnetic sensor (10) and being so designed as to servo-control the position of the magnetic portion (8) at a position determined by a set value supplied to such servo-control electronic circuit.

15. An application of an actuator according to any one of the preceding claims to the production of an electric shaver comprising a head carrying blades driven by a vibratory movement, **characterized in that** each one of said blades is kinematically linked to the magnetic part of such an actuator.

**FIGURES**

FIGURE 1

FIGURE 2

FIGURE 3

FIGURE 4

FIGURE 5

EP 2 678 924 B1

FIGURE 6

FIGURE 7

14

C

14

7a

7

LP

7b

3

7c

**FIGURE 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009119450 A
- WO 2004028759 A
- JP 2005151750 B
- US 20020055695 A
- EP 0592647 A
- EP 1005714 A
- JP 2002519981 B
- JP 2009240044 B
- DE 102005044176